# NEW EUROPEAN PATENT SPECIFICATION

(11) **EP 2 679 097 B2**
(45) Date of publication and mention of the opposition decision: **02.09.2026**
(45) Mention of the grant of the patent: 13.11.2019
(21) Application number: 13186178.3
(22) Date of filing: 18.04.2008
(51) Int. Cl.: A21B 1/42, A21B 1/48

(54) **process to control the airflow and air-leakages between two baking chambers**
Verfahren zur Steuerung des Luftstroms zwischen zwei Backkammern
processus de contrôle du débit d'air et des fuites d'air entre deux chambres de cuisson

(43) Date of publication of application: 01.01.2014
(60) Divisional application: 17189015.5 / 3 335 564
(62) Document number(s) of the earlier application(s) in accordance with Art. 76 EPC: 08007605.2 / 2 110 020
(73) Proprietor: GEA Food Solutions Bakel B.V., 5761 EN Bakel (NL)
(72) Inventor: KUENEN, Hendrikus Antonius Jacobus, 5825 DA Overloon (NL)
(74) Representative: Wolff, Felix

(56) References cited:
- EP-A1- 0 312 335
- EP-A1- 0 558 151
- EP-A1- 0 943 275
- WO-A1-85/05546
- WO-A1-91/11660
- WO-A2-2007/028989
- WO-A2-2008/008305
- CH-A- 302 518
- DE-A1- 2 416 189
- US-A- 4 834 063
- US-A- 5 512 312
- US-A- 5 515 775
- US-A1- 2005 092 312
- US-A1- 2006 040 029

## Description

The present invention relates to an oven comprising:
- a first chamber and a second chambers, which are separated by separation means
- conveyor means for guiding products from the inlet through these chambers to the outlet,
- temperature control means for controlling the temperature and/or humidity in each chamber individually using a fluid and
- a passage in the separation means through which the conveyor means are directed from the first chamber to the second chamber.

The present invention further relates to a process how to operate this oven.

An oven of this type is for example known from EP 1 221 575, EP 0 558 151, US4834063 (A), CH302518 (A), DE2416189 (A1), WO2007028989 (A2), US5512312(A), EP1221575 (A1), EP0558151 (A1), US2005092312 (A1), US2006040029 (A1), WO8505546 (A1), WO2008008305 (A2), US5515775 (A) and EP0943275 (A1) and is suitable for the complete or partial cooking of edible products, especially protein containing products, like chicken, hamburgers cordon bleu etc.. The temperature and humidity can be set such, that during the residence time in the oven, which is dependent on the length and velocity of the conveyor belt, the desired cooking and, if needed, browning can be effected.

Furthermore, the ovens known from the state of art comprise two chambers, which are separated by a partition wall. The conveyor belt moves from the first chamber to the second chamber via an opening in the partition wall. Each chamber has its own heating means and ventilation means, so that different temperature-, humidity- and/or fluid-flow-conditions can be set in each chamber, respectively. However, the cooking process in the ovens according to the state of the art is often not stable and/or not reproducible.

It is therefore an objective of the present invention to provide a process that is stable and leads to reproducible process conditions in the respective chambers.

The problem is solved by a process according to claim 1.

Due to the fluid-leakage reduction, the process conditions, e.g. temperature, humidity and/or the flow-pattern, in the individual chambers can be controlled very well and thus reproducible conditions can be established. The oven is easily operated. By means of a controlled leakage, process conditions in the individual chambers can be influenced.

The subject matter "Control a fluid leakage" means controlling the magnitude and/or the direction of the leakage from the first- to the second chamber or vice versa.

The oven according to the present invention comprises a first and a second chamber, which are separated by separation means, for example a partition. The oven further comprises conveyor means for guiding products from the inlet through these chambers to the outlet. The conveyor means are preferably an endless conveyor belt. In the separation means, there is a passage through which the conveyor means are directed from the first- to the second chamber. It has now been found out, that due to the different conditions in the chambers, respectively, and/or due to the motion of the conveyor means an uncontrolled leakage of process gas, e.g. air and/or process vapor, between the chambers through the passage occurs, which is unpredictable in its magnitude and its direction. Due to this leakage, the process parameters are influenced unpredictably, sometimes resulting in uncontrollable conditions, which makes the cooking process non-reproducible.

According to the present invention, the oven comprises means to control the process-fluid leakage between the two chambers.

Normally, each chamber comprises at least one fan and ducts for a fluid flow, especially the fluid circulation, in the chamber to adjust the temperature and/or humidity in the chamber and/or to improve the heat transfer in the chamber, respectively. From this main fluid flow, the fluid flow to reduce or control the leakage at the passage is preferably separated. Preferably, the oven comprises means to control from which chamber the fluid is taken, the volume-flow-rate and/or the split of the fluid flow between the chambers. This has the advantage, that the cooking process can be executed each time under the same conditions. Furthermore, the oven can be operated such that no, only a minimum or controlled leakage around the passage occurs.

The control means can be adjusted manually or automatically. Preferably, the control means are adjusted automatically, for example by a PLC-controller. The PLC-controller receives information about the process and adjusts, for example, the flow to reduce or control the leakage automatically. Furthermore, the PLC-controller can preferably control out of which chamber the fluid is taken and/or how it is divided after it has been injected in the vicinity of the passage. If, for example the circulation speed of the fluid in one chamber is increased to improve, for example, the heat-transfer, the pressure increases in this chamber, which, according to the state-of-the-art results in an increased leakage. According to the present invention, however, the leakage between the chambers can be reduced and/or controlled to a desired level by adjusting the fluid-flow that that reduces or controls this leakage.

According to a preferred embodiment of the present invention, the oven comprises controlled ventilation means between the first chamber and the second chamber and/or the ambient. This embodiment allows to adjust process parameters in one chamber by controlled ventilation of the chamber with process fluid out of the other chamber. If, for example, the first chamber is operated at a higher temperature and/or humidity than the second chamber, process fluid, e.g. air, can be ventilated from the second to the first chamber, in case the process parameters are too high in the first chamber and vice versa in case that the process parameters are too low in the second chamber. If, for example, the process conditions in the second chamber are above the set point, air can be drawn from the ambient into the second chamber.

This controlled ventilation is reduced or stopped as soon as the desired process conditions have be reached. All this is done via the fans, the passage and/or additional ventilation means. The controlled ventilation is preferably executed by an automatic controller, e.g. a PLC-controller.

The direction of the leakage is from the chamber with a higher pressure to the chamber with the lower pressure.

Due to the leakage, ambient air can be introduced into the first and/or the second chamber.

The present inventions are now explained in further detail according to the attached figures.
- Figure 1: shows an oven according to the preamble of claim 1.
- Figure 2: shows one embodiment of the oven.
- Figures 3,4: show examples of the controlled ventilation.
- Figure 5: shows an example of ventilation with the ambient

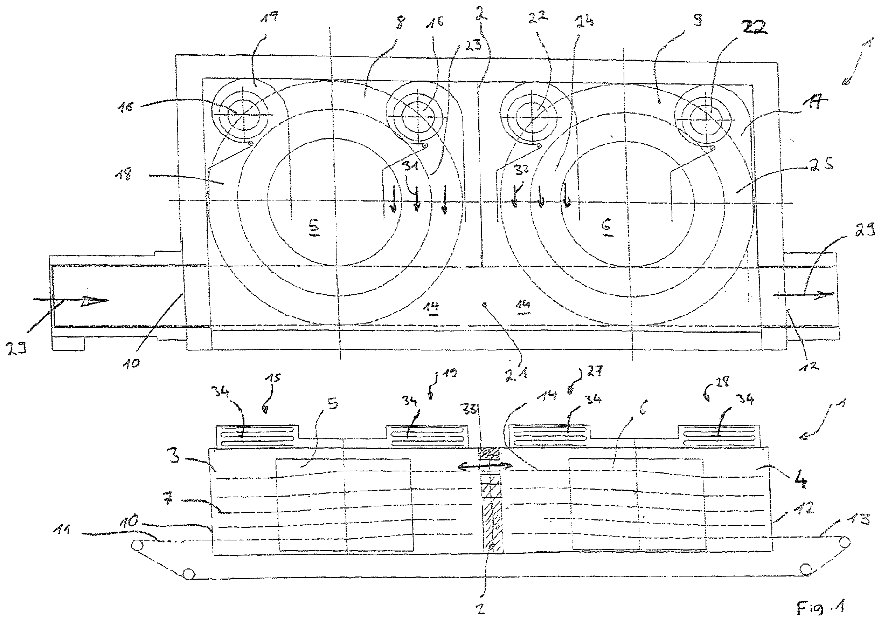

Figure 1 shows an oven according to the state of art. The oven 1 is divided into a first chamber 3 and a second chamber 4. The chambers are divided by means of a partition 2. A rotatable drum 5, 6 is arranged in each of these chambers, around which the conveyor belt 7 is guided along two helical paths 8, 9. The endless conveyor belt enters the oven 1 via the entrance 10 by a straight conveyor belt section 11 and leaves the oven 1 via the exit 12, likewise by means of a straight section 13. The two helical sections 8, 9 are connected by the straight conveyor belt section 14, which lies at the top. The partition means 2 comprise a passage 2.1 for the belt section 14. This passage 2.1 is larger than the conveyor belt 14. It has now been found, that a leakage 33 of the process-fluid e.g. air and steam occur via this passage. This leakage-flow is unpredictable. Internal and external conditions can influence this leakage-flow in its magnitude and/or direction, so that the process-conditions in the oven are often not reproducible.

The heating means, which are overall denoted by 15, 19, 27, 28, are arranged in the top of the housing. These heating means 15, 19, 27, 28 each comprise a fan 16, 22 with a spiral casing 17, which opens into a duct 18, 23 - 25. The heating elements 34 are situated in the ducts, respectively. The process fluid, e.g. air and steam, is sucked up by the fans out of chambers 3, 4 and is forced into the duct via the spiral casing 17, respectively. The process fluid 31, 32 flows past the heating elements 34 and is then reintroduced into the respective chamber 3, 4. The motion of the products (not depicted) to be cooked in the oven is depicted by arrows 29.

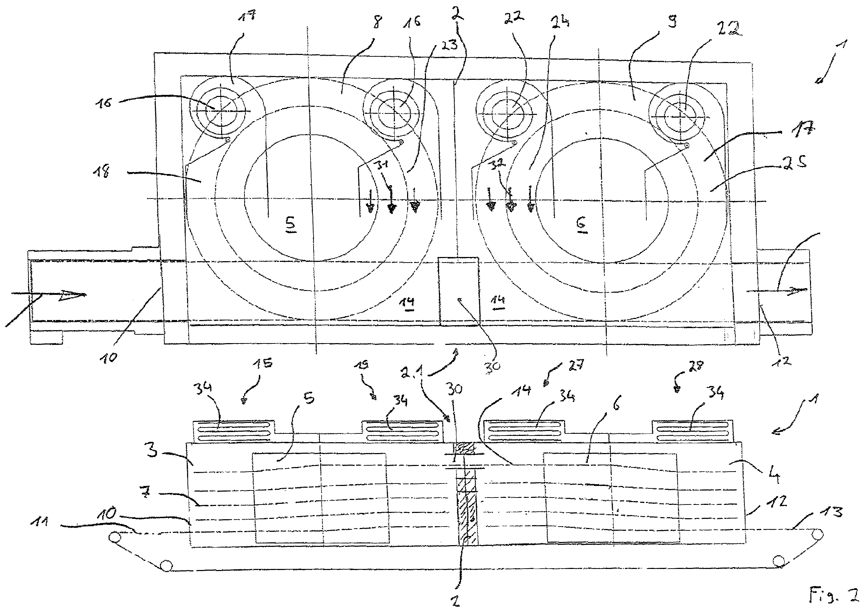

Figure 2 shows the oven, which comprises in the passage 2.1 guiding means 30 in the form of a tube or a tunnel. Into this tube, preferably in the middle, an air flow 26 is injected, which results in a higher pressure in the tube 30. This higher pressure forces the air 26 to flow to the left towards the first chamber 3 and to the right towards the second chamber 4. The magnitude of air flow 26 is preferably controllable such that the leakage is either reduced to zero or has a desired magnitude and a desired direction. Preferably also the division of the flow 26 in the tube 30 is controlled.

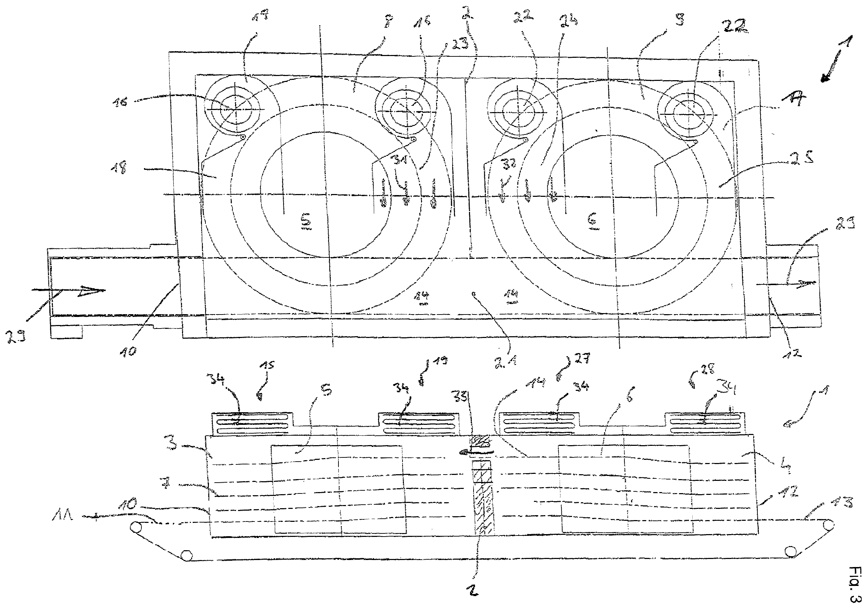

Figure 3 shows an example of controlled leakage between the first chamber 3 and the second chamber 4. The first chamber 3 is operated at a higher temperature and/or humidity than the second chamber 4. In case the temperature and/or humidity in chamber 3 is above the desired set point, a controlled leakage 33 from the second to the first chamber is initiated, as depicted by arrow 33. This leakage is maintained until the process conditions in the first chamber are in the desired range and then stopped again. The place where the leakage 33 takes place can be the passage 2.1 but also any other fluid-connection between the two chambers. The controlled leakage between the two chambers can be initiated and maintained by reducing the pressure in the first chamber 3 and/or increasing the pressure in the second chamber 4. The reduction of the pressure in chamber 3 can be executed by removing air from this chamber for example through the inlet 10. Likewise, air can be forced into chamber 4 to increase its pressure, for example via outlet 12. Alternatively or additionally, air from chamber 4 can be forced, for example by a fan, into chamber 3.

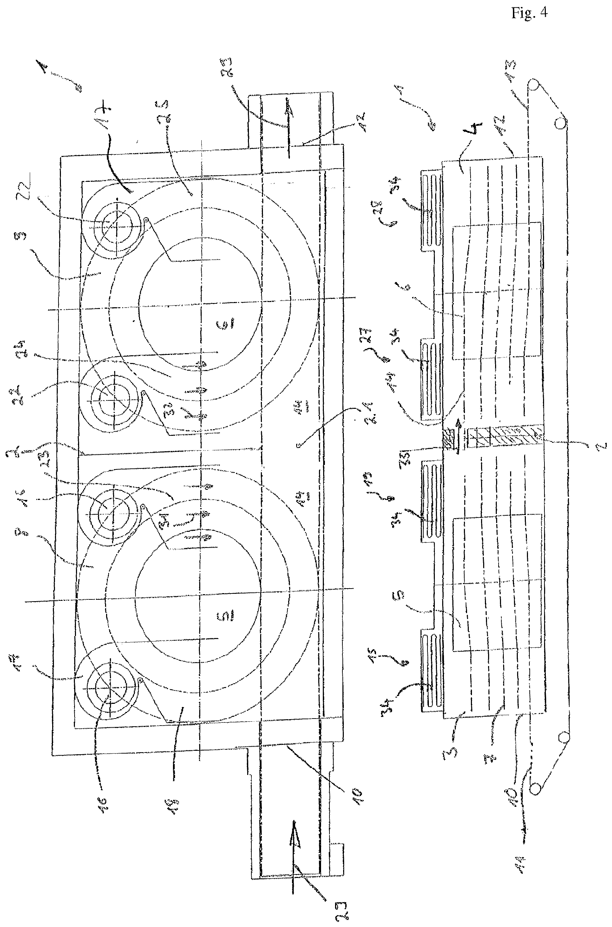

Figure 4 shows another example of controlled leakage between the first chamber 3 and the second chamber 4. The first chamber 3 is operated at a higher temperature and/or humidity than the second chamber 4. In case the temperature and/or humidity in chamber 4 are below the desired set point, a controlled leakage 33 from the first to the second chamber is initiated, as depicted by arrow 33. This leakage is maintained until the process conditions in the second chamber are in the desired range and then stopped. The place where the leakage 33 takes place can be the passage 2.1 but also any other fluid-connection between the two chambers. The controlled leakage between the two chambers can be initiated and maintained by increasing the pressure in the first chamber 3 and/or reducing the pressure in the second chamber 4. The reduction of the pressure in chamber 4 can be executed by removing air from this chamber for example through the outlet 12. Likewise, air can be forced into chamber 3 to increase its pressure, for example via inlet 10. Alternatively or additionally, air from chamber 3 can be forced, for example by a fan, into chamber 4.

It is also possible to have controlled leakage from or to the ambient in order to control the temperature and/or the humidity in one or both of the chambers 3, 4. This leakage is combined with a controlled leakage between the two chambers 3, 4.

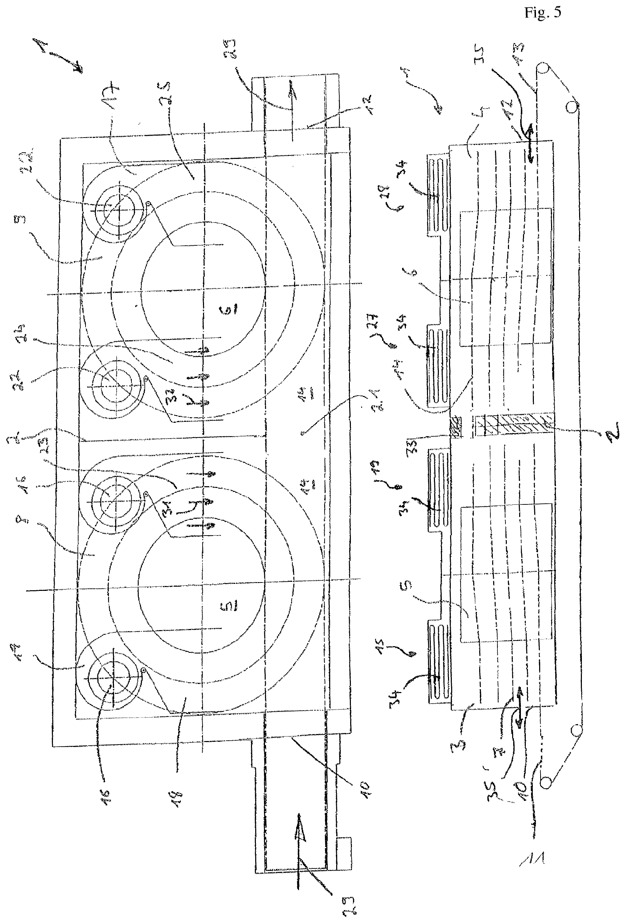

Controlled leakages to the ambient are shown in Figure 5 and depicted by arrows 35.

The controlled leakage to the ambient can be utilized to adjust a parameter in one or both of the chambers and/or to achieve a controlled leakage between the two chambers. The person skilled in the art understands that the leakage 35 need not take place at the inlet or the outlet.

In the case that one chamber has an air exchange with the ambient, but no leakage between the chambers is desired, it can be suppressed by a fluid flow 26, as disclosed above.

## Claims

1. Process to operate an oven (1) comprising:
- a first chamber (3) and a second chamber (4), which are separated by separation means (2),
- each chamber comprising a rotatable drum (5, 6),
- a conveyor belt (7) for guiding products from the inlet (10) through these chambers (3, 4) to the outlet (12),
- the conveyor belt is guided around each drum in a helical path (8, 9) and
wherein the conveyor belt enters the oven (1) via the inlet (10) by a straight belt section (11) and leaves the oven (1) via the outlet (12) by a straight belt section (13) and wherein the two helical paths (8, 9) are connected by a straight belt section (14), which lies at the top,
- wherein the separation means (2) comprise a passage (2.1) for the belt section (14), the passage being larger than the conveyor belt,
- temperature control means (15,19, 22, 16, 27, 28) for controlling the temperature in each chamber individually using a fluid, respectively, the temperature control means being heating means arranged in the top of a housing of the oven (1),
- each chamber comprises at least one fan (16, 22) and ducts for a fluid circulation in the chamber to adjust the temperature and/or humidity in the chamber and/or to improve the heat transfer in the chamber, respectively, the fan (16, 22) being part of the heating means (15, 19, 27, 28) and having a spiral casing which opens into one of the ducts (18, 23, 24, 25), wherein heating elements (34) are situated in the ducts (18, 23, 24, 25), and
- a passage (2.1) in the separation means (2) through which the conveyor belt is directed from the first chamber (3) to the second chamber (4),
- process fluid (31, 32) is sucked up by the fan (16, 22) out of the chamber (3, 4) and forced into one of the ducts (18, 23, 24, 25) via the spiral casing (17) and flows past the heating elements (34) and is then reintroduced into the respective chamber (3, 4),
**characterized in, that** the magnitude and the direction of the leakage between the first chamber (3) and the second chamber (4) or vice versa and to or from the ambient is controlled in order to adjust process parameters in one chamber (3, 4), by reducing the pressure in one chamber or increasing the pressure in one chamber and wherein in case the temperature in a chamber is below or above a desired set point, a controlled leakage via the passage (2.1) or any other fluid connection between the two chambers is initiated and maintained until the temperature is in the respective chamber (3, 4) are in the desired range and then stopped.

2. Process according to claim 1, **characterized in, that** the direction of the leakage (33) is from the first to the second chamber (3, 4).

3. Process according to claims 1 or 2, **characterized in, that** ambient air is introduced into the first and/or the second chamber.

4. Process according to claim 1 where the leakage between two Chambers takes place in passage (2.1).

5. Process according to claim 1 wherein the oven is applied for cooking edible protein containing product.

## Patentansprüche

1. Verfahren zum Betrieb eines Ofens (1), umfassend:
- eine erste Kammer (3) und eine zweite Kammer (4), die durch Trennmittel (2) voneinander getrennt sind,
- wobei jede Kammer eine drehbare Trommel (5, 6) umfasst,
- ein Förderband (7) zum Führen von Produkten vom Einlass (10) durch diese Kammern (3, 4) zum Auslass (12),
- wobei das Förderband um jede Trommel in einem spiralförmigen Pfad (8, 9) geführt wird und wobei das Förderband in den Ofen (1) über den Einlass (10) durch einen geraden Bandabschnitt (11) eintritt und den Ofen (1) über den Auslass (12) durch einen geraden Bandabschnitt (13) verlässt und wobei die zwei spiralförmigen Pfade (8, 9) durch einen geraden Bandabschnitt (14) der auf der Oberseite liegt, miteinander verbunden sind,
- wobei die Trennmittel (2) einen Durchgang (2.1) für den Bandabschnitt (14) umfassen, wobei der Durchgang größer als das Förderband ist,
- Temperatursteuermittel (15, 19, 22, 16, 27, 28) zur individuellen Steuerung der Temperatur in jeder Kammer unter jeweiliger Verwendung eines Fluids, wobei die Temperatursteuermittel Heizmittel sind, die im oberen Bereich eines Gehäuses des Ofens (1) angeordnet sind,
- wobei jede Kammer zumindest ein Gebläse (16, 22) und Kanäle für einen Fluidkreislauf in der Kammer umfasst, um die Temperatur und/oder Feuchtigkeit in der Kammer einzustellen und/oder um die Wärmeübertragung in der Kammer zu verbessern, wobei das Gebläse (16, 22) Teil der Heizmittel (15, 19, 27, 28) ist und ein Spiralgehäuse aufweist, das in einen der Kanäle (18, 23, 24, 25) mündet, wobei Heizelemente (34) in den Kanälen (18, 23, 24, 25) angeordnet sind, und
- einen Durchgang (2.1) in den Trennmitteln (2), durch den das Förderband von der ersten Kammer (3) zur zweiten Kammer (4) geleitet wird,
- wobei Prozessfluid (31, 32) durch das Gebläse (16, 22) aus der Kammer (3, 4) angesaugt und über das Spiralgehäuse (17) in einen der Kanäle (18, 23, 24, 25) gedrückt wird, an den Heizelementen (34) vorbeiströmt und anschließend wieder in die jeweilige Kammer (3, 4) eingeführt wird,
**dadurch gekennzeichnet, dass** das Ausmaß und die Richtung der Leckage zwischen der ersten Kammer (3) und der zweiten Kammer (4) oder umgekehrt und in die oder aus der Umgebung zur Einstellung von Verfahrensparametern in einer Kammer (3, 4) gesteuert wird, indem der Druck in einer Kammer verringert wird oder der Druck in einer Kammer erhöht wird, und wobei für den Fall, dass die Temperatur in einer Kammer unterhalb oder oberhalb eines gewünschten Sollwerts liegt, eine kontrollierte Leckage über den Durchgang (2.1) oder eine beliebige andere Fluidverbindung zwischen den zwei Kammern eingeleitet und aufrechterhalten wird, bis die Temperatur in der jeweiligen Kammer (3, 4) im gewünschten Bereich liegt, und dann gestoppt wird.

2. Verfahren nach Anspruch 1, **dadurch gekennzeichnet, dass** die Richtung der Leckage (33) von der ersten zur zweiten Kammer (3, 4) ist.

3. Verfahren nach den Ansprüchen 1 oder 2, **dadurch gekennzeichnet, dass** Umgebungsluft in die erste und/oder zweite Kammer eingeführt wird.

4. Verfahren nach Anspruch 1, wobei die Leckage zwischen zwei Kammern im Durchgang (2.1) erfolgt.

5. Verfahren nach Anspruch 1, wobei der Ofen zum Garen eines essbaren proteinhaltigen Produkts verwendet wird.

## Revendications

1. Procédé de fonctionnement d'un four (1) comprenant :
- une première chambre (3) et une seconde chambre (4), qui sont séparées par des moyens de séparation (2),
- chaque chambre comprenant un tambour rotatif (5, 6),
- une bande transporteuse (7) pour guider les produits de l'entrée (10) à travers ces chambres (3, 4) vers la sortie (12),
- la bande transporteuse est guidée autour de chaque tambour dans un chemin hélicoïdal (8, 9) et la bande transporteuse entre dans le four (1) via l'entrée (10) par une section de bande droite (11) et quitte le four (1) via la sortie (12) par une section de bande droite (13) et les deux chemins hélicoïdaux (8, 9) sont reliés par une section de bande droite (14) qui est située au sommet,
- les moyens de séparation (2) comprennent un passage (2.1) pour la section de bande (14), le passage étant plus large que la bande transporteuse,
- des moyens de régulation de température (15, 19, 22, 16, 27, 28) pour réguler la température dans chaque chambre individuellement en utilisant respectivement un fluide, les moyens de régulation de température étant des moyens de chauffage disposés dans la partie supérieure d'un boîtier du four (1),
- chaque chambre comprend au moins un ventilateur (16, 22) et des conduits pour une circulation de fluide dans la chambre afin d'ajuster la température et/ou l'humidité dans la chambre et/ou d'améliorer le transfert de chaleur dans la chambre, le ventilateur (16, 22) faisant partie des moyens de chauffage (15, 19, 27, 28) et comportant un carter spiralé qui débouche dans l'un des conduits (18, 23, 24, 25), des éléments chauffants (34) étant situés dans les conduits (18, 23, 24, 25), et
- un passage (2.1) dans les moyens de séparation (2) à travers lequel la bande transporteuse est dirigée de la première chambre (3) vers la seconde chambre (4),
- un fluide de traitement (31, 32) étant aspiré par le ventilateur (16, 22) hors de la chambre (3, 4) et refoulé dans l'un des conduits (18, 23, 24, 25) via le carter spiralé (17), s'écoulant devant les éléments chauffants (34), puis étant réintroduit dans la chambre respective (3, 4),
**caractérisé en ce que** l'amplitude et la direction de la fuite entre la première chambre (3) et la seconde chambre (4) ou vice versa et à destination ou en provenance de l'environnement est contrôlée afin d'ajuster les paramètres de processus dans une chambre (3, 4), en réduisant la pression dans une chambre ou en augmentant la pression dans une chambre et où, dans le cas où la température dans une chambre est inférieure ou supérieure à une température de consigne souhaitée, une fuite contrôlée via le passage (2.1) ou toute autre connexion fluidique entre les deux chambres est initiée et maintenue jusqu'à ce que la température dans la chambre respective (3, 4) soit dans la plage désirée, puis arrêtée.

2. Procédé selon la revendication 1, **caractérisé en ce que** la direction de la fuite (33) est orientée de la première chambre à la seconde chambre (3, 4).

3. Procédé selon la revendication 1 ou 2, **caractérisé en ce que** l'air ambiant est introduit dans la première et/ou la seconde chambre.

4. Procédé selon la revendication 1, dans lequel la fuite entre deux chambres se produit dans le passage (2.1) .

5. Procédé selon la revendication 1, dans lequel le four est utilisé pour cuire un produit comestible contenant des protéines.
